(19) Europäisches Patentamt / European Patent Office / Office européen des brevets

(11) EP 1 951 052 B1

(12) EUROPÄISCHE PATENTSCHRIFT

(45) Veröffentlichungstag und Bekanntmachung des Hinweises auf die Patenterteilung:
**03.05.2017 Patentblatt 2017/18**

(21) Anmeldenummer: **06806688.5**

(22) Anmeldetag: **06.11.2006**

(51) Int Cl.:
*A01N 47/38* (2006.01) *A01P 13/00* (2006.01)
*A01N 25/30* (2006.01) *A01N 25/32* (2006.01)
*A01N 41/10* (2006.01) *A01N 43/56* (2006.01)
*A01N 43/80* (2006.01) *A01N 25/04* (2006.01)

(86) Internationale Anmeldenummer:
**PCT/EP2006/010591**

(87) Internationale Veröffentlichungsnummer:
**WO 2007/057107 (24.05.2007 Gazette 2007/21)**

# (54) WÄSSRIGES HERBIZIDES MITTEL AUF BASIS EINES SUSPENSIONSKONZENTRATS ENTHALTEND HERBIZIDE UND SAFENER

AQUEOUS HERBICIDAL COMPOSITION BASED ON A SUSPENSION CONCENTRATE COMPRISING HERBICIDES AND SAFENER

AGENT HERBICIDE AQUEUX A BASE D'UN CONCENTRE POUR SUSPENSION CONTENANT DES HERBICIDES ET UN INDUCTEUR CHIMIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **17.11.2005 EP 05025149**
**30.06.2006 DE 102006030326**

(43) Veröffentlichungstag der Anmeldung:
**06.08.2008 Patentblatt 2008/32**

(73) Patentinhaber: **Bayer Intellectual Property GmbH**
**40789 Monheim am Rhein (DE)**

(72) Erfinder:
- **PATEL, Smita**
  **65817 Eppstein-Bremthal (DE)**
- **HANNEMANN, Thomas**
  **65830 Kriftel (DE)**
- **WEICK, Tanja**
  **65779 Kelkheim (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A- 1 449 434** **WO-A-00/30447**
**WO-A-01/17350** **WO-A-02/085120**
**WO-A-03/022049** **WO-A-03/022050**
**WO-A-03/026426** **WO-A-03/026427**
**WO-A-2005/051082** **WO-A-2005/087006**
**WO-A2-2005/087004**

- **TADROS TH F: "DISPERSE SYSTEMS IN PESTICIDAL FORMULATIONS" ADVANCES IN COLLOID AND INTERFACE SCIENCE, Bd. 32, 1990, Seiten 205-234, XP002034563**
- **LUCKHAM P F: "THE PHYSICAL STABILITY OF SUSPENSION CONCENTRATES WITH PARTICULAR REFERENCE TO PHARMACEUTICAL AND PESTICIDE FORMULATIONS" PESTICIDE SCIENCE, ELSEVIER APPLIED SCIENCE PUBLISHER. BARKING, GB, Bd. 25, Nr. 1, Januar 1989 (1989-01), Seiten 25-34, XP000068825 ISSN: 0031-613X**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 951 052 B1

## Beschreibung

Wässriges herbizides Mittel auf Basis eines Suspensionskonzentrats enthaltend Herbizide und Safener.

Die vorliegende Erfindung betrifft das Gebiet der Pflanzenschutzmittelformulierungen. Insbesondere betrifft die Erfindung Formulierungen in Form von wässrigen Suspensionskonzentraten, welche mindestens einen herbiziden Wirkstoff aus der Gruppe der Inhibitoren der Acetolactat-Synthetase und mindestens einen Safener aus der Gruppe der Acylsulfonamide enthalten.

Herbizide Wirkstoffe werden im Allgemeinen nicht in ihrer reinen Form eingesetzt. In Abhängigkeit von dem Anwendungsgebiet und der Anwendungsart, sowie von physikalischen, chemischen und biologischen Parametern werden die Wirkstoffe in Mischung mit üblichen Hilfs- und Zusatzstoffen als Wirkstoffformulierung eingesetzt. Viele Herbizide zeigen gegenüber Nutzpflanzen unerwünschte phytotoxische Eigenschaften. Zur Steigerung der herbiziden Aktivität gegenüber einer Vielzahl unerwünschter Pflanzen kann die kombinierte Anwendung mindestens zweier herbizider Wirkstoffe sinnvoll sein. In manchen Fällen werden dabei synergistische Effekte beobachtet.

Zur Vermeidung unerwünschter phytotoxischer Nebenwirkungen ist es bekannt Herbizide in Kombination mit einem sogenannten Safener anzuwenden. Safener sind Verbindungen, die die phytotoxischen Nebenwirkungen von Herbiziden an Nutzpflanzen ganz oder überwiegend vermeiden.

So sind aus WO 03/026427 unter anderem die Mischungen der herbiziden Wirkstoffe der Formel (I),

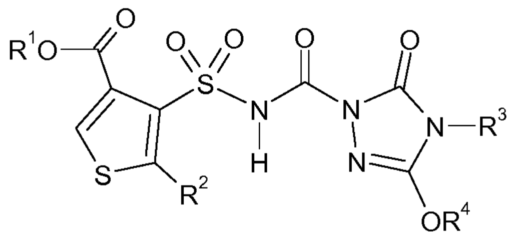

(I)

worin die Reste $R^1$ bis $R^4$ im Wesentlichen für Alkyl stehen,
und Safener der Formel (II)

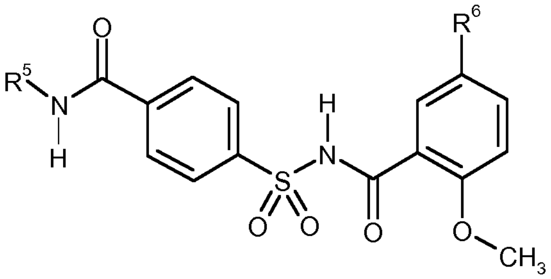

(II),

worin $R^5$ im Wesentlichen für Alkyl oder Cycloalkyl und $R^6$ im Wesentlichen für Wasserstoff, Alkyl oder Halogen stehen, bekannt.

Aus WO 03/026426 sind Mischungen der herbiziden Wirkstoffe der Formel (I) mit anderen herbiziden Wirkstoffen, unter anderen Isoxaflutole, bekannt.

Aus WO 2005/087006 ist die Kombination von thiencarbazone-methyl, d.h. der Verbindung der Formel (I), worin $R^1$ bis $R^4$ jeweils für Methyl stehen, mit cyprosulfamide, d.h. der Verbindung der Formel (II), worin $R^5$ für cyclo-Propyl und $R^6$ für Wasserstoff stehen, und isoxaflutole, d.h. der Verbindung der Formel (III), worin Q für $Q^2$, $R^7$ für Methylsulfonyl, $R^8$ für Wasserstoff und $R^9$ für Trifluomethyl stehen, bekannt.

Aus WO 2005/087004 sind die Kombinationen von

a) thiencarbazone-methyl mit cyprosulfamide und pyrasulfotole, d.h. der Verbindung der Formel (III), worin Q für $Q^3$, $R^7$ für Methylsulfonyl, $R^8$ für Wasserstoff und $R^9$ für Trifluormethyl stehen, sowie
b) thiencarbazone-methyl mit cyprosulfamide und tembotrione, d.h. der Verbindung der Formel (III), worin Q für $Q^1$, $R^7$ für Chlor, $R^8$ für 2,2,2-Trifluorethoxymethyl und $R^9$ für Methylsulfonyl stehen, bekannt.

Aus dem Dokument EP 1 449 434 sind wässrige Herbizidkonzentrate, insbesondere Suspensionskonzentrate, auf der Basis eines spezifischen Sulfonylharnstoffs, nämlich Halosulfuron-methyl bekannt. Thien-3-ylsulfonylamino(thio)carbonyl-triazolin(thio)one sind in EP 1 449 434 nicht offenbart. Für die in Dokument EP 1 449 434 beispielhaft

belegten Suspensionskonzentrate wurden als Dispergiermittel Tristyrylphenol-polyethylenglykol-phosphorsäureester eingesetzt, wobei diese nicht alleine, sondern in Form einer Dispergiermittelkombination, bestehend aus Polyoxyethylenalkylethern und Tristyrylphenol-polyethylenglykolphosphorsäureestern, eingesetzt werden. Die Lehre von Dokument EP 1 449 434 ist nicht darauf gerichtet, dass durch Einsatz eines spezifischen Tristyrylphenol-polyethylenglykol-phosphorsäureesters die Lagerstabilität und zugleich die Mischbarkeit eines Herbizidsuspensionskonzentrats mit einer Düngemittellösung deutlich verbessert werden kann.

Aus Dokument WO 03/022049 ist ein oberflächenaktives Tensid-System zur Formulierung von Pestiziden bekannt. Das System weist mindestens ein anionenaktives Tensid auf, das aus der Gruppe der Polyarylphenol-polyalkoxyester-Sulfate und der Polyarylphenol-polyalkoxyester-Phospate ausgewählt ist, wobei die anionenaktive Komponente, nach der Lehre von Dokument WO 03/022049, durch mindestens eine basische Verbindung neutralisiert werden muss. Entsprechend ist die Lehre von Dokument WO 03/022049 nicht darauf gerichtet, dass durch den Einsatz eines spezifischen Tristyrylphenol-polyethylenglykol-phosphorsäureesters als Dispergiermittel neben der Lagerstabilität zugleich auch die Mischbarkeit eines Herbizidsuspensionskonzentrats mit einer Düngemittellösung deutlich verbessert werden kann.

Alle vorstehend und nachstehend mit ihrem common name bezeichenten Wirkstoffe sind auch beispielsweise aus "The Pesticide Manual", 13th edition, The British Crop Protection Council and the Royal Soc. of Chemistry, 2003, und von der Webseite http://www.hclrss.demon.co.uk bekannt.

Obgleich die genannten Mischungen aus herbiziden Wirkstoffen der Formel (I) und Safener der Formel (II) eine gute herbizide Wirkung, insbesondere zur Bekämpfung von unerwünschten Pflanzen in Kulturen von Mais zeigen, weisen sie in der Praxis nicht immer zufrieden stellende Eigenschaften auf wie beispielsweise nicht ausreichende Wirkung gegen unerwünschte Pflanzen und/oder mangelende Verträglichkeit in Nutzpflanzen, insbesondere in Mais. Weiterhin ist beispielsweise die Lagerstabilität solcher Mischungen nicht immer ausreichend. Ein weiterer Nachteil ist darin zu sehen, daß bei der anwenderseits erfolgenden Verdünnung zu einer Spritzbrühe die beiden Wirkstoffe darin nicht immer gleichmäßig verteilt vorliegen, insbesondere dann nicht, wenn die Verdünnung der Mischung nicht in Wasser, sondern in einer konzentrierten wässrigen Lösung von Düngemitteln erfolgen soll. Anwenderseits wird zunehmend die Möglichkeit zur Verdünnung in konzentrierten wässrigen Lösung von Düngemitteln nachgefragt.

Die Aufgabe der vorliegenden Erfindung bestand darin, eine Pflanzenschutzmittelformulierung für die herbiziden Wirkstoffe der Formel (I) in Kombination mit Safenern der Formel (II) und gegebenenfalls einem weiteren Herbizid aus der Gruppe der Inhibitoren der Hydroxyphenylpyruvat Dioxygenase bereit zu stellen, wobei diese Pflanzenschutzmittelformulierung über eine hohe Lagerstabilität verfügen soll und nach Verdünnung mit konzentrierten wässrigen Lösungen von Düngemitteln eine gleichmäßige Verteilung der Wirkstoffe ermöglichen soll.

Diese Aufgabe wird gelöst durch das spezielle Suspensionskonzentrat der vorliegenden Erfindung.

Die vorliegende Erfindung betrifft somit ein wässriges Suspensionskonzentrat, enthaltend

A) einen herbiziden Wirkstoff der Formel (I), (Komponente A),

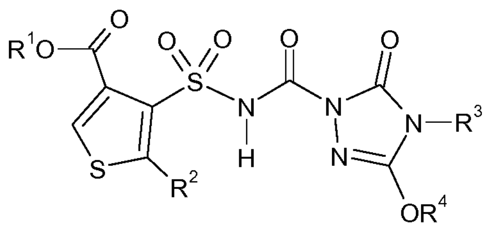 (I),

worin

$R^1$, $R^2$, $R^3$ und $R^4$ unabhängig voneinander Methyl oder Ethyl bedeuten,

B) einen Safener der Formel (II), (Komponente B)

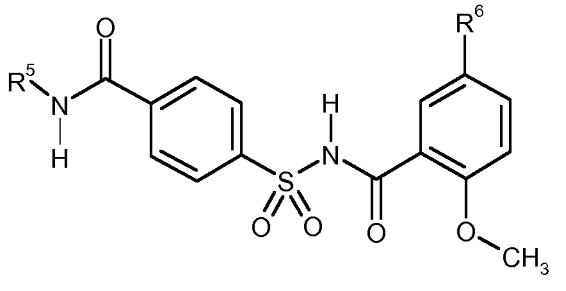 (II),

worin

$R^5$ iso-Propyl oder cyclo-Propyl, und
$R^6$ Wasserstoff oder Chlor bedeuten,

C) gegebenenfalls einen herbiziden Wirkstoff der Formel (III), (Komponente C)

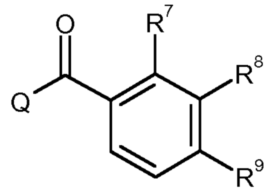

(III),

worin
Q einen Rest $Q^1$, $Q^2$ oder $Q^3$ bedeutet,

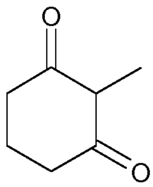

$Q^1$

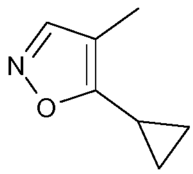

$Q^2$

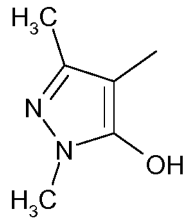

$Q^3$

$R^7$ Chlor, Methylsulfonyl oder Trifluormethyl bedeutet,
$R^8$ Wasserstoff oder 2,2,2-Trifluorethoxymethyl bedeutet,
$R^9$ Methylsulfonyl oder Trifluormethyl bedeutet,

D) Dispergiermittel und
E) Wasser.

Herbizide Wirkstoffe der Formel (I) sind beispielsweise aus WO 01/05788 bekannt. Safener der Formel (II) sind beispielsweise aus US 6,251,827 bekannt. Herbizide Wirkstoffe der Formel (III), worin Q für $Q^1$ steht, sind beispielsweise aus US 6,376,429 bekannt. Wirkstoffe der Formel (III), worin Q für $Q^2$ steht, sind beispielsweise aus EP 0 527 036 bekannt. Wirkstoffe der Formel (111), worin Q für $Q^3$ steht, sind beispielsweise aus US 6,420,317 bekannt.

Die erfindungsgemäßen wässrigen Suspensionskonzentrate zeigen eine hohe Lagerstabilität und bei Verdünnung in Wasser oder auch in konzentrierten wässrigen Lösung von Düngemitteln eine gleichmäßige Verteilung der Wirkstoffe und neigen nicht zur Verstopfung von Spritzdüsen.

Die Wirkstoffe der Formeln (I), (II) und (III) können in den erfindungsgemäßen Suspensionskonzentraten auch in Form ihrer Salze vorliegen. Als Salze geeignet sind solche wie sie in den Schriften WO 01/05788, US 6,251,827, US 6,376,429, EP 0 527 036 und US 6,420,317 beschrieben sind, insbesondere die Alkalimetall-, Erdalkalimetall- und Ammoniumsalze. In der vorliegenden Anmeldung soll daher, sofern nicht anders vermerkt, von den Begriffen "herbizider Wirkstoff der Formel (I)" beziehungsweise "Formel (III)" und "Safener der Formel (II)" jeweils sowohl die freie Verbindung wie auch ihr jeweiliges Salz, insbesonders das Natriumsalz, umfasst sein.

Die erfindungsgemäßen wässrigen Suspensionskonzentrate können zusätzlich weitere im Pflanzenschutz übliche Hilfs- und Zusatzstoffe, insbesonders

F) Frostschutzmittel
G) Konservierungsmittel
H) Entschäumer
I) Verdickungs- und Thixotropiermittel

enthalten.

Darüberhinaus können sie noch weitere Stoffe, wie Farb- und Duftstoffe, Anti-Drift-, Haft- und Penetrationsmittel, Verdunstungshemmer, sowie den pH-Wert und die Viskosität beeinflussende Mittel enthalten.

Als Dispergiermittel kommen z.B. ionische und nichtionische Dispergatoren in Frage, z.B.:

1) Tristyrylphenol-polyethylenglykol-phosphorsäureester, z. B. Dispersogen® LFH (Clariant) der CAS-Nr. 114535-82-9,
2) Alkylpolyglycoside, wie $C_9$- bis $C_{11}$-Alkyl-Glucopyranoside, z. B. solche der Agnique® PG-Reihe 9116 (Cognis),
3) Alkylpolyglucoside, z. B. AL 2575 (Uniqema) der CAS-Nr. 68515-73-1.

Der Gesamtanteil an Dispergiermitteln in den erfindungsgemäßen Suspensionskonzentraten liegt im allgemeinen zwischen 0,5 und 20 Gew.%. Werden die Dispergiermittel, neben ihren dispergierenden Eigenschaften, auch zur Erhöhung der biologischen Effektivität, z. B. als Penetrations- oder Haftmittel, eingesetzt, kann sich ihr Anteil in den erfindungsgemäßen Suspensionskonzentraten auf bis zu 30 Gew.% erhöhen.

Geeignete Frostschutzmittel sind solche aus der Gruppe der Harnstoffe, Diole und Polyole, wie Ethylenglycol und Propylenglycol. Der Anteil an Frostschutzmitteln in den erfindungsgemäßen Suspensionskonzentraten liegt im allgemeinen zwischen 1 und 15 Gew.%, insbesondere zwischen 2 und 10 Gew.%.

Geeignete Konservierungsmittel sind solche aus der Gruppe der Isothiazole, wie 2-Methyl-2H-isothiazol-3-on, 1,2-Benzisothiazol-3-(2H)on und Natriumsalz. Der Anteil an Konservierungsmitteln in den erfindungsgemäßen Suspensionskonzentraten liegt im allgemeinen zwischen 0,05 und 1 Gew.%, insbesondere zwischen 0,05 und 0,5 Gew.%.

Geeignete Entschäumer sind beispielsweise solche auf Basis von Siliconen, insbesonders Poly Dimethyl Siloxane, vorzugsweise Rhodorsil® 481. Der Anteil an Entschäumern in den erfindungsgemäßen Suspensionskonzentraten liegt im allgemeinen zwischen 0,05 und 1 Gew.%, insbesondere zwischen 0,1 und 0,5 Gew.%.

Als Verdickungs- und Thixotropiermittel kommen z.B. in Frage:

1) modifizierte natürliche Silikate, wie chemisch modifizierte Bentonite, Hectorite, Attapulgite, Montmorillonite, Smektite oder andere Silikatmineralien, wie Bentone® (Elementis), Attagel® (Engelhard), Agsorb® (Oil-Dri Corporation) oder Hectorite® (Akzo Nobel),
2) natürliche und synthetische Silikate, wie Silikate der Sipernat®-, Aerosil®- oder Durosil®-Reihe (Degussa), der CAB-O-SIL®-Reihe (Cabot) oder der Van Gel-Reihe (R.T. Vanderbilt),
3) Verdicker auf Basis synthetischer Polymere, wie Verdicker der Thixin®- oder Thixatrol®-Reihe (Elementis).

Bevorzugte Verdickungs- und Thixotropiermittel sind z.B. modifizierte Schichtsilikate und natürliche und synthetische Silikate. Der Anteil an Verdickungs- und Thixotropiermitteln in den erfindungsgemäßen Suspensionskonzentraten liegt im allgemeinen zwischen 0,1 und 5 Gew.%, insbesondere zwischen 0,2 und 3 Gew.%.

Farb- und Duftstoffe sind dem Fachmann bekannt.

Je nach Verwendungszweck, das heißt je nachdem welche Schadpflanzen in der jeweiligen Nutzpflanzenkultur zu bekämpfen ist, enthalten die erfindungsgemäßen wässrigen Suspensionskonzentrate noch einen weiteren agrochemischen Wirkstoff, vorzugsweise aus der Reihe der Herbizide. Dieser weitere herbizide Wirkstoff kann sowohl im erfindungsgemäßen wässrigen Suspensionskonzentrat als sogenannte Fertigformulierung vorliegen, als auch als sogenannte Tankmischung durch gemeinsame Verdünnung der getrennt formulierten oder partiell getrennt formulierten Komponenten zur Anwendung gebracht werden.

Die Wirkstoffe A1 bis A16 der Formel (I) sind in den erfindungsgemäßen wässrigen Suspensionskonzentraten besonders geeignet:

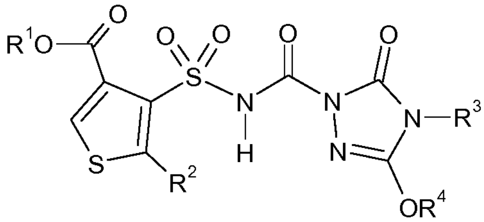
(I),

| Nr. | $R^1$ | $R^2$ | $R^3$ | $R^4$ |
|---|---|---|---|---|
| A1 | Ethyl | Ethyl | Ethyl | Ethyl |

(fortgesetzt)

| Nr. | $R^1$ | $R^2$ | $R^3$ | $R^4$ |
|---|---|---|---|---|
| A2 | Ethyl | Ethyl | Ethyl | Methyl |
| A3 | Ethyl | Ethyl | Methyl | Ethyl |
| A4 | Ethyl | Methyl | Ethyl | Ethyl |
| A5 | Methyl | Ethyl | Ethyl | Ethyl |
| A6 | Ethyl | Ethyl | Methyl | Methyl |
| A7 | Methyl | Ethyl | Ethyl | Methyl |
| A8 | Methyl | Methyl | Ethyl | Ethyl |
| A9 | Ethyl | Methyl | Ethyl | Methyl |
| A10 | Methyl | Ethyl | Methyl | Ethyl |
| A11 | Ethyl | Methyl | Methyl | Ethyl |
| A12 | Methyl | Methyl | Methyl | Methyl |
| A13 | Methyl | Methyl | Methyl | Ethyl |
| A14 | Methyl | Methyl | Ethyl | Methyl |
| A15 | Methyl | Ethyl | Methyl | Methyl |
| A16 | Ethyl | Methyl | Methyl | Methyl |

Die Wirkstoffe B1 bis B4 der Formel (II) sind in den erfindungsgemäßen wässrigen Suspensionskonzentraten besonders geeignet:

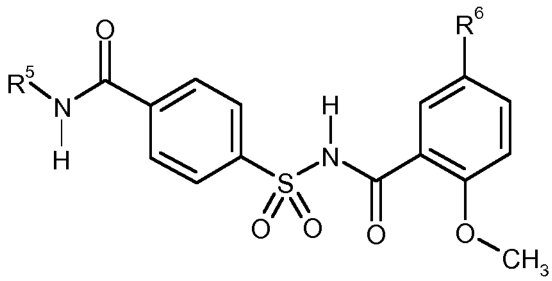

(II),

| Nr. | $R^5$ | $R^6$ |
|---|---|---|
| B1 | iso-Propyl | Wasserstoff |
| B2 | iso-Propyl | Chlor |
| B3 | cyclo-Propyl | Wasserstoff |
| B4 | cyclo-Propyl | Chlor |

Die Wirkstoffe C1 bis C3 der Formel (III) sind in den erfindungsgemäßen wässrigen Suspensionskonzentraten besonders geeignet:

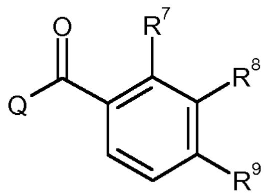

(III),

| Nr. | Q | $R^7$ | $R^8$ | $R^9$ |
|---|---|---|---|---|
| C1 | 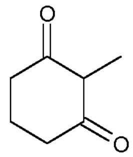 | Cl | $CH_2OCH_2CF_3$ | $SO_2CH_3$ |
| C2 | 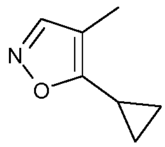 | $SO_2CH_3$ | H | $CF_3$ |
| C3 | 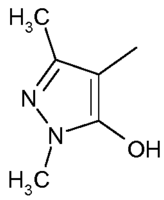 | $SO_2CH_3$ | H | $CF_3$ |

Als bevorzugte Beispiele seien erfindungsgemäße Suspensionskonzentrate genannt, welche die nachfolgend genannten Komponenten A und B beziehungsweise A, B und C enthalten, ohne dass dadurch eine Einschränkung erfolgen soll.

| | | | | | |
|---|---|---|---|---|---|
| A1 + B1 | A2 + B1 | A3 + B1 | A4 + B1 | A5 + B1 | A6 + B1 |
| A7 + B1 | A8 + B1 | A9 + B1 | A10 + B1 | A11 + B1 | A12 + B1 |
| A13 + B1 | A14 + B1 | A15 + B1 | A16 + B1 | A1 + B2 | A2 + B2 |
| A3 + B2 | A4 + B2 | A5 + B2 | A6 + B2 | A7 + B2 | A8 + B2 |
| A9 + B2 | A10 + B2 | A11 + B2 | A12 + B2 | A13 + B2 | A14 + B2 |
| A15 + B2 | A16 + B2 | A1 + B3 | A2 + B3 | A3 + B3 | A4 + B3 |
| A5 + B3 | A6 + B3 | A7 + B3 | A8 + B3 | A9 + B3 | A10 + B3 |
| A11 + B3 | A12 + B3 | A13 + B3 | A14 + B3 | A15 + B3 | A16 + B3 |
| A1 + B4 | A2 + B4 | A3 + B4 | A4 + B4 | A5 + B4 | A6 + B4 |
| A7 + B4 | A8 + B4 | A9 + B4 | A10 + B4 | A11 + B4 | A12 + B4 |
| A13 + B4 | A14 + B4 | A15+ B4 | A16 + B4 | | |

| | | | |
|---|---|---|---|
| A1 + B1 + C1 | A1 + B2 + C1 | A1 + B3 + C1 | A1 + B4 + C1 |
| A1 + B1 + C2 | A1 + B2 + C2 | A1 + B3 + C2 | A1 + B4 + C2 |
| A1 + B1 + C3 | A1 + B2 + C3 | A1 + B3 + C3 | A1 + B4 + C3 |

| | | | |
|---|---|---|---|
| A2 + B1 + C1 | A2 + B2 + C1 | A2 + B3 + C1 | A2 + B4 + C1 |
| A2 + B1 + C2 | A2 + B2 + C2 | A2 + B3 + C2 | A2 + B4 + C2 |
| A2 + B1 + C3 | A2 + B2 + C3 | A2 + B3 + C3 | A2 + B4 + C3 |

| | | | |
|---|---|---|---|
| A3 + B1 + C1 | A3 + B2 + C1 | A3 + B3 + C1 | A3 + B4 + C1 |
| A3 + B1 + C2 | A3 + B2 + C2 | A3 + B3 + C2 | A3 + B4 + C2 |
| A3 + B1 + C3 | A3 + B2 + C3 | A3 + B3 + C3 | A3 + B4 + C3 |

| | | | |
|---|---|---|---|
| A4 + B1 + C1 | A4 + B2 + C1 | A4 + B3 + C1 | A4 + B4 + C1 |
| A4 + B1 + C2 | A4 + B2 + C2 | A4 + B3 + C2 | A4 + B4 + C2 |
| A4 + B1 + C3 | A4 + B2 + C3 | A4 + B3 + C3 | A4 + B4 + C3 |

| | | | |
|---|---|---|---|
| A5 + B1 + C1 | A5 + B2 + C1 | A5 + B3 + C1 | A5 + B4 + C1 |
| A5 + B1 + C2 | A5 + B2 + C2 | A5 + B3 + C2 | A5 + B4 + C2 |
| A5 + B1 + C3 | A5 + B2 + C3 | A5 + B3 + C3 | A5 + B4 + C3 |

| | | | |
|---|---|---|---|
| A6 + B1 + C1 | A6 + B2 + C1 | A6 + B3 + C1 | A6 + B4 + C1 |
| A6 + B1 + C2 | A6 + B2 + C2 | A6 + B3 + C2 | A6 + B4 + C2 |
| A6 + B1 + C3 | A6 + B2 + C3 | A6 + B3 + C3 | A6 + B4 + C3 |

| | | | |
|---|---|---|---|
| A7 + B1 + C1 | A7 + B2 + C1 | A7 + B3 + C1 | A7 + B4 + C1 |
| A7 + B1 + C2 | A7 + B2 + C2 | A7 + B3 + C2 | A7 + B4 + C2 |
| A7 + B1 + C3 | A7 + B2 + C3 | A7 + B3 + C3 | A7 + B4 + C3 |

| | | | |
|---|---|---|---|
| A8 + B1 + C1 | A8 + B2 + C1 | A8 + B3 + C1 | A8 + B4 + C1 |
| A8 + B1 + C2 | A8 + B2 + C2 | A8 + B3 + C2 | A8 + B4 + C2 |
| A8 + B1 + C3 | A8 + B2 + C3 | A8 + B3 + C3 | A8 + B4 + C3 |

| | | | |
|---|---|---|---|
| A9 + B1 + C1 | A9 + B2 + C1 | A9 + B3 + C1 | A9 + B4 + C1 |
| A9 + B1 + C2 | A9 + B2 + C2 | A9 + B3 + C2 | A9 + B4 + C2 |
| A9 + B1 + C3 | A9 + B2 + C3 | A9 + B3 + C3 | A9 + B4 + C3 |

| | | | |
|---|---|---|---|
| A10 + B1 + C1 | A10 + B2 + C1 | A10 + B3 + C1 | A10 + B4 + C1 |
| A10 + B1 + C2 | A10 + B2 + C2 | A10 + B3 + C2 | A10 + B4 + C2 |
| A10 + B1 + C3 | A10 + B2 + C3 | A10 + B3 + C3 | A10 + B4 + C3 |

| | | | |
|---|---|---|---|
| A11 + B1 + C1 | A11 + B2 + C1 | A11 + B3 + C1 | A11 + B4 + C1 |
| A11 + B1 + C2 | A11 + B2 + C2 | A11 + B3 + C2 | A11 + B4 + C2 |
| A11 + B1 + C3 | A11 + B2 + C3 | A11 + B3 + C3 | A11 + B4 + C3 |

| | | | |
|---|---|---|---|
| A12 + B1 + C1 | A12 + B2 + C1 | A12 + B3 + C1 | A12 + B4 + C1 |
| A12 + B1 + C2 | A12 + B2 + C2 | A12 + B3 + C2 | A12 + B4 + C2 |
| A12 + B1 + C3 | A12 + B2 + C3 | A12 + B3 + C3 | A12 + B4 + C3 |

| | | | |
|---|---|---|---|
| A14 + B1 + C1 | A14 + B2 + C1 | A14 + B3 + C1 | A14 + B4 + C1 |
| A14 + B1 + C2 | A14 + B2 + C2 | A14 + B3 + C2 | A14 + B4 + C2 |
| A14 + B1 + C3 | A14 + B2 + C3 | A14 + B3 + C3 | A14 + B4 + C3 |

| | | | |
|---|---|---|---|
| A13 + B1 + C1 | A13 + B2 + C1 | A13 + B3 + C1 | A13 + B4 + C1 |
| A13 + B1 + C2 | A13 + B2 + C2 | A13 + B3 + C2 | A13 + B4 + C2 |
| A13 + B1 + C3 | A13 + B2 + C3 | A13 + B3 + C3 | A13 + B4 + C3 |

| | | | |
|---|---|---|---|
| A15 + B1 + C1 | A15 + B2 + C1 | A15 + B3 + C1 | A15 + B4 + C1 |
| A15 + B1 + C2 | A15 + B2 + C2 | A15 + B3 + C2 | A15 + B4 + C2 |
| A15 + B1 + C3 | A15 + B2 + C3 | A15 + B3 + C3 | A15 + B4 + C3 |

| | | | |
|---|---|---|---|
| A16 + B1 + C1 | A16 + B2 + C1 | A16 + B3 + C1 | A16 + B4 + C1 |
| A16 + B1 + C2 | A16 + B2 + C2 | A16 + B3 + C2 | A16 + B4 + C2 |
| A16 + B1 + C3 | A16 + B2 + C3 | A16 + B3 + C3 | A16 + B4 + C3 |

Bevorzugt sind auch erfindungsgemäße wässrige Suspensionskonzentrate der vorstehend genannten Kombinationen der Wirkstoffe A und B beziehungsweise A, B und C jeweils in Mischung mit einem oder mehreren Dispergiermitteln aus der Gruppe der Tristyrylphenol-polyethylenglykol-phosphorsäureester, Alkylpolyglycoside und Alkylpolyglucoside

In einer bevorzugten Ausführungsform enthalten die erfindungsgemäßen wässrigen Suspensionskonzentrate

A) 4 bis 30% eines herbiziden Wirkstoffs A1 bis A16 der Formel (I),
B) 4 bis 30% eines Safeners B1 bis B4 der Formel (II),
C) 0 bis 35% eines herbiziden Wirkstoffs C1 bis C3 der Formel (III),
D) 0,5 bis 30% eines oder mehrerer Dispergiermittel,
E) 30 bis 70% Wasser,
F) 1 bis 15% eines oder mehrerer Frostschutzmittel,
G) 0,05 bis 1 % eines oder mehrerer Konservierungsmittel,
H) 0,05 bis 1 % eines oder mehrerer Entschäumer,
I) 0,1 bis 5% eines oder mehrerer Verdickungs- oder Thixotropiermittel.

Besonders bevorzugt sind erfindungsgemäße wässrige Suspensionskonzentrate, enthaltend

A) 5 bis 25% eines herbiziden Wirkstoffs A1 bis A16 der Formel (I),
B) 5 bis 25% eines Safeners B1 bis B4 der Formel (II),
C) 0 bis 30% eines herbiziden Wirkstoffs C1 bis C3 der Formel (III),
D) 1 bis 20% eines oder mehrerer Dispergiermittel,
E) 35 bis 65% Wasser,
F) 2 bis 10% eines oder mehrerer Frostschutzmittel,
G) 0,05 bis 0,5% eines oder mehrerer Konservierungsmittel,
H) 0,1 bis 1% eines oder mehrerer Entschäumer,
I) 0,2 bis 3% eines oder mehrerer Verdickungs- oder Thixotropiermittel.

Ganz besonders bevorzugt sind erfindungsgemäße wässrige Suspensionskonzentrate, enthaltend

A) 5 bis 20% eines herbiziden Wirkstoffs A1 bis A16, insbesonders A12, der Formel (I),
B) 8 bis 20% eines Safeners B1 bis B4, insbesonders B3, der Formel (II),
C) 0 bis 25% eines herbiziden Wirkstoffs C1 bis C3, insbesonders C2, der Formel (III),
D) 2,5 bis 15% eines oder mehrerer Dispergiermittel,
E) 40 bis 60% Wasser,

F) 2,5 bis 10% eines oder mehrerer Frostschutzmittel,
G) 0,05 bis 0,25% eines oder mehrerer Konservierungsmittel,
H) 0,1 bis 0,5% eines oder mehrerer Entschäumer,
I) 0,25 bis 2,5% eines oder mehrerer Verdickungs- oder Thixotropiermittel.

Alle Prozentangaben sind Gewichtsprozente.

Die vorstehend genannnten Formulierungshilfsmittel der Gruppen d) und f) bis i) sind dem Fachmann bekannt und werden beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidaddukte", Wiss. Verlagsgesell., Stuttgart 1976; Winnacker-Küchler, "Chemische Technologie", Band 7, C. Hauser Verlag München, 4. Aufl. 1986.

Zur Anwendung können die erfindungsgemäßen wässrigen Suspensionskonzentrate in üblicher Weise verdünnt werden, z.B. mittels Wasser oder in wässrige Lösungen von Düngemitteln, wie Ammoniumhydrogensulfat. Es kann vorteilhaft sein, erhaltenen Spritzbrühen weitere agrochemische Wirkstoffe (z.B. Tankmischpartner in Form entsprechender Formulierungen) und/oder zur Anwendung übliche Hilfs- und Zusatzstoffe und/oder Düngemittel zuzugeben. Als vorteilhaft hat es sich herausgestellt, die erfindungsgemäßen wässrigen Suspensionskonzentrate oder herbizide Mittel mit wässrigen Lösungen von Düngemitteln, beispielsweise Ammoniumnitrat und Ammoniumsulfat zu verdünnen. Gegenstand der vorliegenden Erfindung sind daher auch solche wässrige Suspensionskonzentrate oder wässriges herbizide Mittel enthaltend die im vorstehenden Abschnitt genannten agrochemische Wirkstoffe, Hilfs- und Zusatzstoffe und/oder Düngemittel.

Die erfindungsgemäßen wässrigen Suspensionskonzentrate und wässriges herbizide Mittel weisen eine ausgezeichnete herbizide Wirksamkeit gegen ein breites Spektrum wirtschaftlich wichtiger mono- und dikotyler Schadpflanzen auf. Auch schwer bekämpfbare perennierende Unkräuter, die aus Rhizomen, Wurzelstöcken oder anderen Dauerorganen austreiben, werden gut erfaßt.

Die erfindungsgemäßen wässrigen Suspensionskonzentrate und wässriges herbizide Mittel zeichnen sich durch eine schnell einsetzende und lang andauernde herbizide Wirkung aus.

Obgleich die erfindungsgemäßen wässrigen Suspensionskonzentrate und wässriges herbizide Mittel eine ausgezeichnete herbizide Aktivität gegenüber mono- und dikotylen Unkräutern aufweisen, werden Kulturpflanzen wirtschaftlich bedeutender Kulturen z.B. zweikeimblättriger Kulturen wie Soja, Baumwolle, Raps, Zuckerrüben, oder Gramineen-Kulturen wie Weizen, Gerste, Roggen, Hafer, Hirse, Zuckerrohr, Kaffee, Tee, Kakao, Kokosnuß, Bananen oder Mais nur unwesentlich oder gar nicht geschädigt. Die erfindungsgemäßen wässrigen Suspensionskonzentrate und herbizide Mittel eignen sich aus diesen Gründen sehr gut zur selektiven Bekämpfung von unerwünschtem Pflanzenwuchs in landwirtschaftlichen Nutzpflanzungen, insbesondere in Kulturen von Mais, oder in Zierpflanzungen.
Aufgrund ihrer herbiziden Eigenschaften können die erfindungsgemäßen wässrigen Suspensionskonzentrate und wässriges herbizide Mittel auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt.

Bevorzugt ist die Anwendung der erfindungsgemäßen wässrigen Suspensionskonzentrate und wässriges herbizide Mittel in wirtschaftlich bedeutenden transgenen Kulturen von Nutz- und Zierpflanzen, z. B. von Gramineen-Kulturen wie Weizen, Gerste, Roggen, Hafer, Hirse, Reis und Mais, insbesondere Mais, oder auch Kulturen von Zuckerrübe, Baumwolle, Soja, Raps, Kartoffel, Tomate, Erbse und anderen Gemüsesorten. Vorzugsweise können die erfindungsgemäßen wässrigen Suspensionskonzentrate und herbiziden Mittel als Herbizide in Nutzpflanzenkulturen eingesetzt werden, welche gegenüber den phytotoxischen Wirkungen der herbiziden Wirkstoffe resistent sind bzw. gentechnisch resistent gemacht worden sind.

Bei der Anwendung der erfindungsgemäßen wässrigen Suspensionskonzentrate und wässriges herbizide Mittel in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der vorliegenden Erfindung ist weiterhin auch ein Verfahren zur Bekämpfung von unerwünschtem

Pflanzenwuchs, vorzugsweise in Pflanzenkulturen wie Getreide (z.B. Weizen, Gerste, Roggen, Hafer, Reis, Mais, Hirse), Zuckerrübe, Zuckerrohr, Raps, Baumwolle und Soja, besonders bevorzugt in monokotylen Kulturen wie Getreide, z.B. Weizen, Gerste, Roggen, Hafer, Kreuzungen davon wie Triticale, Reis, Mais und Hirse, wobei man ein oder mehrere erfindungsgemäße wässrige Suspensionskonzentrate oder wässriges herbizide Mittel auf die Schadpflanzen, Pflanzenteile, Pflanzensamen oder die Fläche auf der die Pflanzen wachsen, z.B. die Anbaufläche appliziert.

Die Pflanzenkulturen können auch gentechnisch verändert oder durch Mutationsselektion erhalten sein und sind bevorzugt tolerant gegenüber Acetolactatsynthase (ALS)-Inhibitoren.

Die Herstellung der erfindungsgemäßen wässrigen Suspensionskonzentrate wird in dem Fachmann bekannter Weise beispielsweise durch Mischen der einzelnen Inhaltsstoffe bewerkstelligt, siehe dazu Winnacker-Küchler, "Chemische Technologie", Band 7, C. Hauser Verlag München, 4. Aufl. 1986, Wade van Valkenburg, "Pesticide Formulations", Marcel Dekker, N.Y., 1973; K. Martens, "Spray Drying" Handbook, 3rd Ed. 1979, G. Goodwin Ltd. London.

Die nachfolgenden Beispiele verdeutlichen die Erfindung. Die hier verwendeten Tenside und Hilfsstoffe bedeuten:

| | |
|---|---|
| Dispersogen® LFH | = Tristyrylphenol-polyethyleneglykol-phosphorsäureester, Lieferant: CLARIANT |
| Agnique® PG 9116 | = $C_9$- bis $C_{11}$-Alkyl-Glucopyranosid, Lieferant: COGNIS |
| AL 2575 | = Alkylpolyglucosid, Lieferant: UNIQEMA |
| Rhodorsil® 416 | = Entschäumer auf Basis von Poly Dimethyl Siloxan, Lieferant: RHODIA |
| Acticide® MBS | = Mischung aus 2-Methyl-2H-isothiazol-3-on und 1,2-Benzisothiazol-3-(2H)on Lieferant: THOR |
| Proxel® GXL | = Natriumsalz von 1,2-Benzisothiazol-3-(2H)on Lieferant: ZENECA |
| Aerosil® 200 | = Siliziumdioxid, chemisch gewonnen Lieferant: Degussa |
| Attagel® 50 | = Magnesium-Aluminium-Hydrosilikat Lieferant: CHEMIE-MINERALIEN GMBH |
| VanGel® B | = Hydratisiertes Magnesium-Aluminium-Silikat Lieferant: VANDERBILT INC., ERBSLÖH KG |

Ausführungsbeispiele

Die nachfolgend beschriebene Herstellweise bezieht sich auf die Rezepturen der unten genannten Beispiele 1 bis 4:

Wasser wird in einem Rührkessel vorgelegt. Unter Rühren werden Entschäumer, Dispergier-, Konservierungs- und Frostschutzmittel, Herbizide sowie Safener zugegeben und kurz weiter gerührt. Dann werden Verdickungs- und Thixotropiermittel zugegeben. Die so erhaltene Suspension wird in einer Kolloidalmühle grob vorgemahlen und anschließend in einer Glaskugelmühle unter Verwendung von Glaskugeln mit einem Durchmesser von 1 mm so lange gemahlen bis eine mittlere Partikelgröße von 1 bis 2 Micron erreicht wird. Während der Mahlvorgänge wird die Suspension unter externer Kühlung bei einer Temperatur von maximal 25° C gehalten.

Beispiel 1:

A) 7,95 g Herbizid A12
B) 13,16 g Safener B3
C) 19,32 g Herbizid C2
D) 3,00 g Dispersogen®LFH
D) 2,00 g AL 2575
E) 46,57 g Wasser
F) 7,00 g Propylenglykol
G) 0,10 g Proxel® GXL
H) 0,25 g Rhodorsil® 416
I) 0,65 g Aerosil® 200

Beispiel 2:

A) 7,95 g Herbizid A12
B) 13,16 g Safener B3
C) 19,32 g Herbizid C2

D) 3,00 g Dispersogen®LFH
D) 2,00 g Agnique® PG 9116
E) 46,57 g Wasser
F) 7,00 g Propylenglykol
G) 0,10 g Proxel® GXL
H) 0,25 g Rhodorsil® 416
I) 0,65 g Aerosil® 200

Beispiel 3:

A) 20,21 g Herbizid A12
B) 20,08 g Safener B3
D) 3,00 g Dispersogen®LFH
D) 1,00 g AL 2575
E) 47,36 g Wasser
F) 7,00 g Propylenglykol
G) 0,10 g Proxel® GXL
H) 0,25 g Rhodorsil® 416
I) 0,50 g Attagel® 50
I) 0,50 g VanGel® B

Beispiel 4:

A) 20,05 g Herbizid A12
B) 20,08 g Safener B3
D) 4,00 g Dispersogen®LFH
D) 1,00 g AL 2575
E) 46,32 g Wasser
F) 7,00 g Propylenglykol
G) 0,10 g Proxel® GXL
H) 0,25 g Rhodorsil® 416
I) 0,60 g Attagel® 50
I) 0,60 g VanGel® B

Die erfindungsgemäßen wässrigen Suspensionskonzentrate zeigen nach einer Lagerung von mehreren Monaten auch bei erhöhter Temperatur eine ausgezeichnete Stabilität und neigen weder zum Ausflocken noch zur Verstopfung von Spritzdüsen.

Ausführungsbeispiele

Herbizide Wirkung im Nachauflauf

Samen von mono- bzw. dikotylen Unkraut- bzw. Kulturpflanzen werden in Holzfasertöpfen oder in Plastiktöpfen in sandigem Lehmboden ausgelegt, mit Erde abgedeckt und im Gewächshaus, während der Vegetationsperiode auch im Freien außerhalb des Gewächshauses, unter guten Wachstumsbedingungen angezogen. 2-3 Wochen nach der Aussaat werden die Versuchspflanzen im Ein- bis Drei-Blattstadium behandelt. Die formulierten herbiziden Mittel werden in verschiedenen Dosierungen mit einer Wasseraufwandmenge von umgerechnet 300 l/ha unter Zusatz von Netzmittel (0,2 bis 0,3 %) auf die Pflanzen und die Bodenoberfläche gespritzt. 3 bis 4 Wochen nach Behandlung der Versuchspflanzen wird die Wirkung der Präparate visuell im Vergleich zu unbehandelten Kontrollen bonitiert (herbizide Wirkung in Prozent (%): 100 % Wirkung = Pflanzen sind abgestorben, 0 % Wirkung = wie Kontrollpflanzen).

Dabei zeigen beispielsweise die herbiziden Mittel 1 bis 4 bei einer Aufwandmenge von 320 g (Summe der drei Komponenten A, B und C und in einem Verhältnis von 1 : 1,65 : 2,43) pro Hektar eine mindestens 90%-ige Wirkung gegen zahlreiche Schadpflanzen wie Abutilon theophrasti, Alopecurus myosuroides, Amaranthus retroflexus, Avena fatua, Chenopodium album, Cyperus serotinus, Digitaria sanguinalis, Matricaria chamomilla, Setaria viridis sowie Veronica persica und eine geringere als 5%-ige Schädigung von Kulturpflanzen wie Mais.

| Herbizides Mittel Nr. | Komponente | | |
|---|---|---|---|
| 1 | A12 | B3 | C2 |
| 2 | A12 | B1 | C2 |
| 3 | A14 | B3 | C2 |
| 4 | A14 | B1 | C2 |

Durch Vergleich der Wirkung von Testsubstanzen auf Kulturpflanzen, welche ohne und mit Safener behandelt wurden, kann die Wirkung der Safenersubstanz beurteilt werden.

Dabei wird festgestellt, daß die herbiziden Wirkungen der erfindungsgemäßen Mittel (100% beziehungsweise 99%) über den Erwartungswerten nach Colby (jeweils 85%) liegen, die sich nach folgender Formel errechnen (vgl. S. R. Colby; in Weeds 15 (1967) S. 20 bis 22):

$$E = A + B - \frac{A \times B}{100}$$

Dabei bedeuten:

A, B = jeweils Wirkung der Komponente A bzw.B in Prozent
E = Erwartungswert in Prozent

**Patentansprüche**

1. Wässriges Suspensionskonzentrat, enthaltend

A) einen herbiziden Wirkstoff der Formel (I), in suspendierter Form,

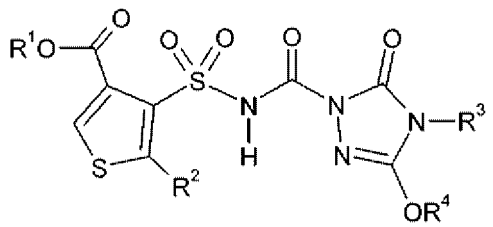

(I),

worin
$R^1$, $R^2$, $R^3$ und $R^4$ unabhängig voneinander Methyl oder Ethyl bedeuten,
B) einen Safener der Formel (II),

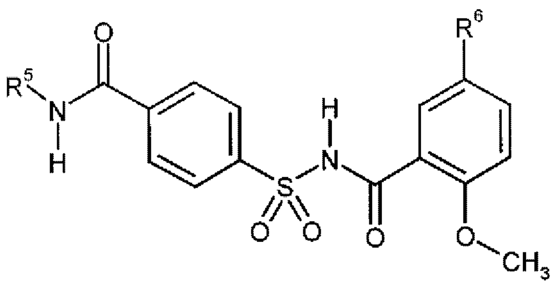

(II),

worin

$R^5$ iso-Propyl ader cyclo-Propyl, und
$R^6$ Wasserstoff oder Chlor bedeuten,

C) gegebenenfalls einen herbiziden Wirkstoff der Formel (III),

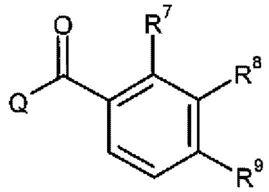

(III),

worin
Q einen Rest $Q^1$, $Q^2$ oder $Q^3$ bedeutet,

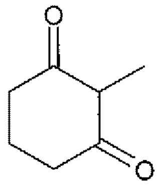

$Q^1$

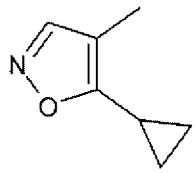

$Q^2$

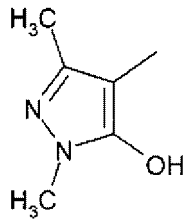

$Q^3$

$R^7$ Chlor, Methylsulfonyl oder Trifluormethyl bedeutet,
$R^8$ Wasserstoff oder 2,2,2-Trifluorethoxymethyl bedeutet,
$R^9$ Methylsulfonyl oder Trifluormethyl bedeutet,

D) als Dispergiermittel Poly(oxy-1,2-ethanediyl),alpha-phosphono-omega-[2,4,6-tris(1-phenylethyl)phenoxy] und
E) Wasser.

2. Suspensionskonzentrate nach Anspruch 1, enthaltend Dispergiermittel aus der Gruppe umfassend weitere Tristyrylphenol-polyethylenglykol-phosphorsäureester, Alkylpolyglycoside und Alkylpolyglucoside.

3. Suspensionskonzentrate nach Anspruch 1 oder 2, enthaltend zusätzlich

F) Frostschutzmittel
G) Konservierungsmittel
H) Entschäumer
I) Verdickungs- und Thixotropiermittel.

4. Suspensionskonzentrate nach einem der Ansprüche 1 bis 3, enthaltend

A) 4 bis 30% eines herbiziden Wirkstoffs A1 bis A16 der Formel (I),

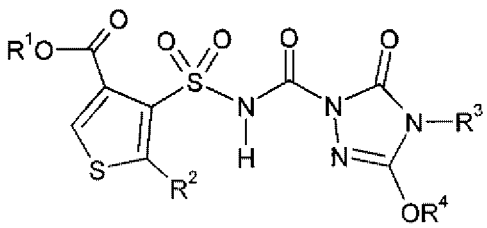

(I),

worin die Reste $R^1$, $R^2$, $R^3$ und $R^4$ wie folgt definiert sind

| | $R^1$ | $R^2$ | $R^3$ | $R^4$ |
|---|---|---|---|---|
| A1 | Ethyl | Ethyl | Ethyl | Ethyl |
| A2 | Ethyl | Ethyl | Ethyl | Methyl |
| A3 | Ethyl | Ethyl | Methyl | Ethyl |
| A4 | Ethyl | Methyl | Ethyl | Ethyl |
| A5 | Methyl | Ethyl | Ethyl | Ethyl |
| A6 | Ethyl | Ethyl | Methyl | Methyl |
| A7 | Methyl | Ethyl | Ethyl | Methyl |
| A8 | Methyl | Methyl | Ethyl | Ethyl |
| A9 | Ethyl | Methyl | Ethyl | Methyl |
| A10 | Methyl | Ethyl | Methyl | Ethyl |
| A11 | Ethyl | Methyl | Methyl | Ethyl |
| A12 | Methyl | Methyl | Methyl | Methyl |
| A13 | Methyl | Methyl | Methyl | Ethyl |
| A14 | Methyl | Methyl | Ethyl | Methyl |
| A15 | Methyl | Ethyl | Methyl | Methyl |
| A16 | Ethyl | Methyl | Methyl | Methyl |

B) 4 bis 30% eines Safeners B1 bis B4 der Formel (II),

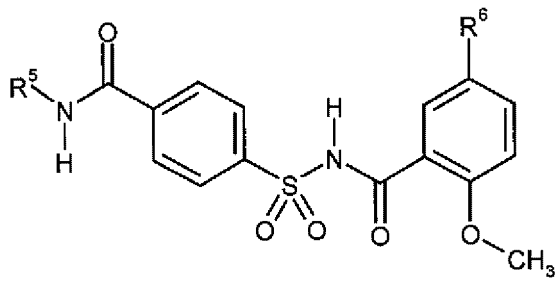

(II),

worin die Reste $R^5$ und $R^6$ wie folgt definiert sind

| | $R^5$ | $R^6$ |
|---|---|---|
| B1 | iso-Propyl | Wasserstoff |
| B2 | iso-Propyl | Chlor |
| B3 | cyclo-Propyl | Wasserstoff |
| B4 | cyclo-Propyl | Chlor |

C) 0 bis 35% eines herbiziden Wirkstoffs C1 bis C3 der Formel (III),

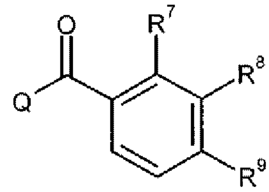

(III),

worin die Reste Q, $R^7$, $R^8$ und $R^9$ wie folgt definiert sind

| | Q | $R^7$ | $R^8$ | R9 |
|---|---|---|---|---|
| C1 | 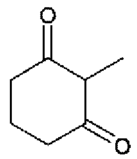 | Cl | $CH_2OCH_2CF_3$ | $SO_2CH_3$ |
| C2 | 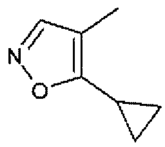 | $SO_2CH_3$ | H | $CF_3$ |
| C3 | 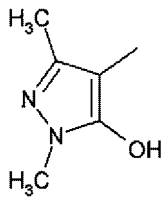 | $SO_2CH_3$ | H | $CF_3$ |

D) 0,5 bis 30% eines oder mehrerer Dispergiermittel,
E) 30 bis 70% Wasser,
F) 1 bis 15% eines oder mehrerer Frostschutzmittel,
G) 0,05 bis 1% eines oder mehrerer Konservierungsmittel,
H) 0,05 bis 1% eines oder mehrerer Entschäumer,
I) 0,1 bis 5% eines oder mehrerer Verdickungs- oder Thixotropiermittel.

**5.** Suspensionskonzentrate nach einem der Ansprüche 1 bis 4, enthaltend

A) 5 bis 25% eines herbiziden Wirkstoffs A1 bis A16 der Formel (I),
B) 5 bis 25% eines Safeners B1 bis B4 der Formel (II),
C) 0 bis 30% eines herbiziden Wirkstoffs C1 bis C3 der Formel (III),
D) 1 bis 20% eines oder mehrerer Dispergiermittel,
E) 35 bis 65% Wasser,
F) 2 bis 10% eines oder mehrerer Frostschutzmittel,
G) 0,05 bis 0,5% eines oder mehrerer Konservierungsmittel,
H) 0,1 bis 1% eines oder mehrerer Entschäumer,
I) 0,2 bis 3% eines oder mehrerer Verdickungs- oder Thixotropiermittel.

**6.** Suspensionskonzentrate nach einem der Ansprüche 1 bis 5, enthaltend

A) 5 bis 20% eines herbiziden Wirkstoffs A1 bis A16 der Formel (I),
B) 8 bis 20% eines Safeners B1 bis B4 der Formel (II),
C) 0 bis 25% eines herbiziden Wirkstoffs C1 bis C3 der Formel (III),
D) 2,5 bis 15% eines oder mehrerer Dispergiermittel,
E) 40 bis 60% Wasser,

F) 2 bis 10% eines oder mehrerer Frostschutzmittel,
G) 0,05 bis 0,25% eines oder mehrerer Konservierungsmittel,
H) 0,1 bis 0,5% eines oder mehrerer Entschäumer,
I) 0,25 bis 2,5% eines oder mehrerer Verdickungs- oder Thixotropiermittel.

**7.** Wässriges herbizides Mittel, erhältlich durch Verdünnung eines Suspensionskonzentrats nach einem der Ansprüche 1 bis 6 mit Wasser.

**8.** Wässriges herbizides Mittel, erhältlich durch Verdünnung eines Suspensionskonzentrats nach einem der Ansprüche 1 bis 6 mit einer wässrigen Lösung von Düngemitteln.

**9.** Wässriges herbizides Mittel nach Anspruch 9 8, worin das Düngemittel Ammoniumsulfat oder Ammoniumnitrat ist.

**10.** Verfahren zur Bekämpfung von unerwünschtem Pflanzenwuchs, worin eine wirksame Menge eines wässrigen Suspensionskonzentrats gemäß einem der Ansprüche 1 bis 6 auf die Pflanzen, Teile der Pflanzen, das Saatgut oder die Fläche, auf der Pflanzen wachsen, appliziert wird.

**11.** Verwendung eines Suspensionskonzentrats gemäß einem der Ansprüche 1 bis 6 zur Bekämpfung von unerwünschtem Pflanzenwuchs.

## Claims

**1.** An aqueous suspension concentrate, comprising

A) a herbicidally active compound of the formula (I) in suspended form

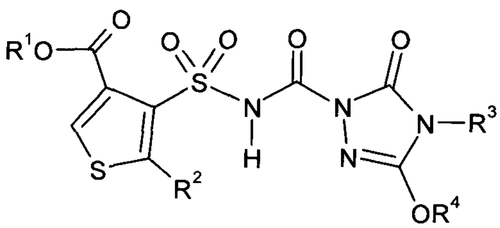

(I),

in which
R1, R2, R3 and R4 independently of one another are methyl or ethyl,
B) a safener of the formula (II),

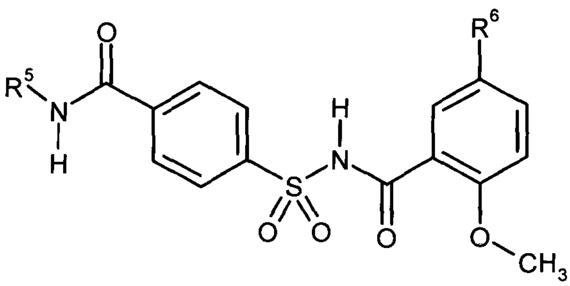

(II),

in which

R5 is isopropyl or cyclopropyl and
R6 is hydrogen or chlorine,

C) optionally a herbicidally active compound of the formula (III),

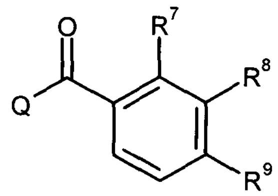

(III),

in which
Q is a radical Q1, Q2 or Q3,

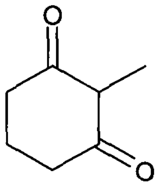

Q1

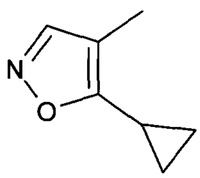

Q2

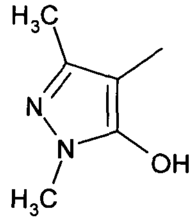

Q3

R7 is chlorine, methylsulfonyl or trifluoromethyl,
R8 is hydrogen or 2,2,2-trifluoroethoxymethyl,
R9 is methylsulfonyl or trifluoromethyl,

D) as dispersant, poly(oxy-1,2-ethanediyl), alpha-phosphono-omega-[2, 4, 6-tris(1-phenylethyl)phenoxy] and
E) water.

2. The suspension concentrate as claimed in claim 1, comprising dispersants from the group consisting of further tristyrylphenol polyethylene glycol phosphoric esters, alkyl polyglycosides and alkyl polyglucosides.

3. The suspension concentrate as claimed in claim 1 or 2, additionally comprising

F) antifreeze agents
G) preservatives
H) defoamers
I) thickeners and thixotropic agents.

4. The suspension concentrate as claimed in any of claims 1 to 3, comprising

A) from 4 to 30% of a herbicidally active compound A1 to A16 of the formula (I),

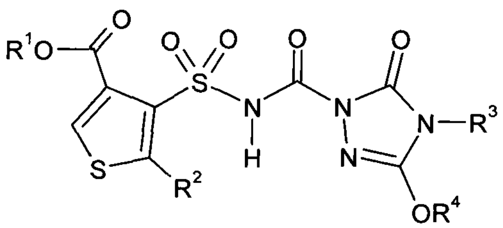

(I),

in which the radicals $R^1$, $R^2$, $R^3$ and $R^4$ are defined as follows

| | $R^1$ | $R^2$ | $R^3$ | $R^4$ |
|---|---|---|---|---|
| A1 | ethyl | ethyl | ethyl | ethyl |

(continued)

| | $R^1$ | $R^2$ | $R^3$ | $R^4$ |
|---|---|---|---|---|
| A2 | ethyl | ethyl | ethyl | methyl |
| A3 | ethyl | ethyl | methyl | ethyl |
| A4 | ethyl | methyl | ethyl | ethyl |
| A5 | methyl | ethyl | ethyl | ethyl |
| A6 | ethyl | ethyl | methyl | methyl |
| A7 | methyl | ethyl | ethyl | methyl |
| A8 | methyl | methyl | ethyl | ethyl |
| A9 | ethyl | methyl | ethyl | methyl |
| A10 | methyl | ethyl | methyl | ethyl |
| A11 | ethyl | methyl | methyl | ethyl |
| A12 | methyl | methyl | methyl | methyl |
| A13 | methyl | methyl | methyl | ethyl |
| A14 | methyl | methyl | ethyl | methyl |
| A15 | methyl | ethyl | methyl | methyl |
| A16 | ethyl | methyl | methyl | methyl |

B) from 4 to 30% of a safener B1 to B4 of the formula (II),

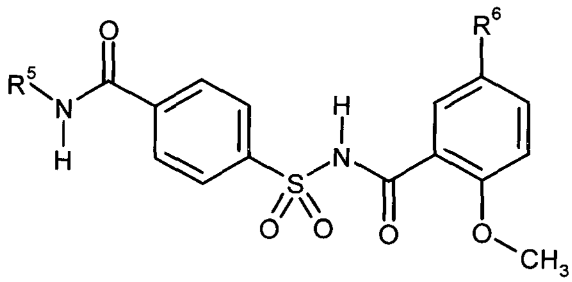

(II),

in which the radicals $R^5$ and $R^6$ are defined as follows

| | $R^5$ | $R^6$ |
|---|---|---|
| B1 | isopropyl | hydrogen |
| B2 | isopropyl | chlorine |
| B3 | cyclopropyl | hydrogen |
| B4 | cyclopropyl | chlorine |

C) from 0 to 35% of a herbicidally active compound C1 to C3 of the formula (III),

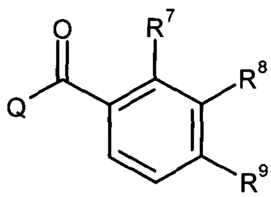

(III),

in which the radicals Q, $R^7$, $R^8$ and $R^9$ are defined as follows

| | Q | $R^7$ | $R^8$ | $R^9$ |
|---|---|---|---|---|
| C1 | 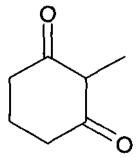 | Cl | $CH_2OCH_2CF_3$ | $SO_2CH_3$ |
| C2 | 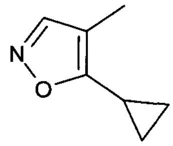 | $SO_2CH_3$ | H | $CF_3$ |
| C3 | 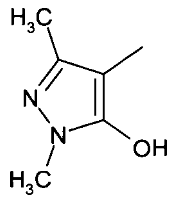 | $SO_2CH_3$ | H | $CF_3$ |

D) from 0.5 to 30% of one or more dispersants,
E) from 30 to 70% of water,
F) from 1 to 15% of one or more antifreeze agents,
G) from 0.05 to 1% of one or more preservatives,
H) from 0.05 to 1% of one or more defoamers,
I) from 0.1 to 5% of one or more thickeners or thixotropic agents.

**5.** The suspension concentrate as claimed in any of claims 1 to 4, comprising

A) from 5 to 25% of a herbicidally active compound A1 to A16 of the formula (I),
B) from 5 to 25% of a safener B1 to B4 of the formula (II),
C) from 0 to 30% of a herbicidally active compound C1 to C3 of the formula (III),
D) from 1 to 20% of one or more dispersants,
E) from 35 to 65% of water,
F) from 2 to 10% of one or more antifreeze agents,
G) from 0.05 to 0.5% of one or more preservatives,
H) from 0.1 to 1% of one or more defoamers,
I) from 0.2 to 3% of one or more thickeners or thixotropic agents.

**6.** The suspension concentrate as claimed in one or more of claims 1 to 5, comprising

A) from 5 to 20% of a herbicidally active compound A1 to A16 of the formula (I),
B) from 8 to 20% of a safener B1 to B4 of the formula (II),
C) from 0 to 25% of a herbicidally active compound C1 to C3 of the formula (III),
D) from 2.5 to 15% of one or more dispersants,
E) from 40 to 60% of water,
F) from 2 to 10% of one or more antifreeze agents,
G) from 0.05 to 0.25% of one or more preservatives,
H) from 0.1 to 0.5% of one or more defoamers,
I) from 0.25 to 2.5% of one or more thickeners or thixotropic agents.

**7.** An aqueous herbicidal composition, obtainable by diluting a suspension concentrate as claimed in any of claims 1 to 6 with water.

8. An aqueous herbicidal composition, obtainable by diluting a suspension concentrate as claimed in any of claims 1 to 6 with an aqueous solution of fertilizers.

9. The aqueous herbicidal composition as claimed in claim 8, where the fertilizer is ammonium sulfate or ammonium nitrate.

10. A method for controlling unwanted vegetation wherein an effective amount of an aqueous suspension concentrate as claimed in any of claims 1 to 6 is applied to the plants, parts of the plants, the seed or the area in which the plants grow.

11. The use of a suspension concentrate as claimed in any of claims 1 to 6 for controlling unwanted vegetation.

## Revendications

1. Concentré de suspension aqueux, contenant :

A) un agent actif herbicide de formule (I), sous forme suspendue,

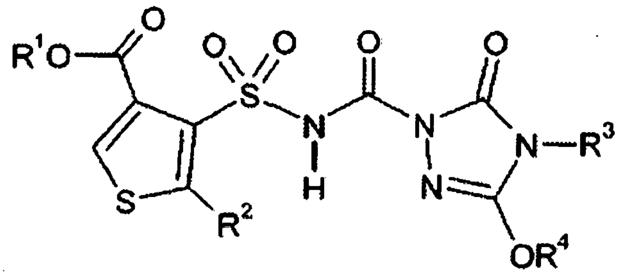

(I),

dans laquelle
$R^1$, $R^2$, $R^3$ et $R^4$ signifient indépendamment les uns des autres méthyle ou éthyle,
B) un agent protecteur de formule (II)

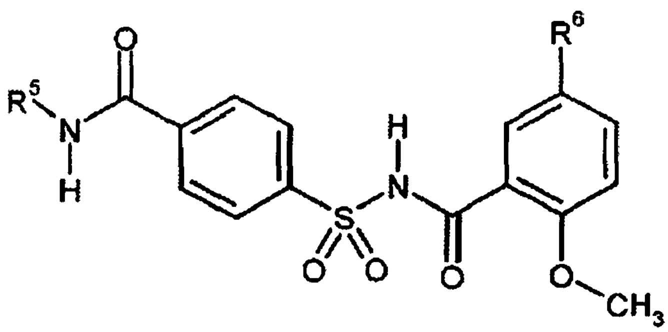

(II),

dans laquelle

$R^5$ signifie isopropyle ou cyclopropyle, et
$R^6$ signifie hydrogène ou chlore,

C) éventuellement un agent actif herbicide de formule (III)

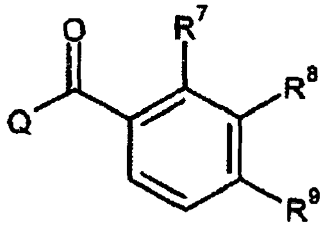

(III),

dans laquelle
Q signifie un radical $Q^1$, $Q^2$ ou $Q^3$

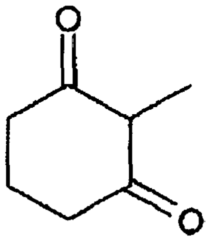

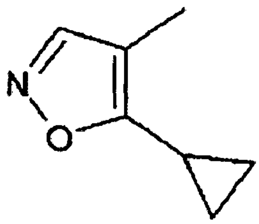

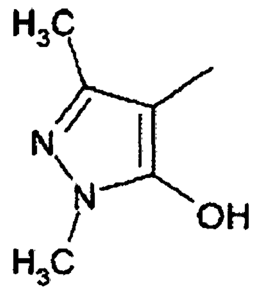

$Q^1$ $Q^2$ $Q^3$

$R^7$ signifie chlore, méthylsulfonyle ou trifluorométhyle,
$R^8$ signifie hydrogène ou 2,2,2-trifluoroéthoxyméthyle,
$R^9$ signifie méthylsulfonyle ou trifluorométhyle,

D) en tant que dispersant, du poly(oxy-1,2-éthanediyl)-alpha-phosphono-oméga[2,4,6-tris(1-phényléthyl)phénoxy] et
E) de l'eau.

2. Concentrés de suspension selon la revendication 1, contenant un dispersant du groupe comprenant d'autres esters de l'acide tristyrylphénol-polyéthylène glycol-phosphorique, les polyglycosides d'alkyle et les polyglucosides d'alkyle.

3. Concentrés de suspension selon la revendication 1 ou 2, contenant en outre

F) des agents antigel,
G) des conservateurs,
H) des antimousses,
I) des agents épaississants et thixotropiques.

4. Concentrés de suspension selon l'une quelconque des revendications 1 à 3, contenant :

A) 4 à 30 % d'un agent actif herbicide A1 à A16 de formule (I)

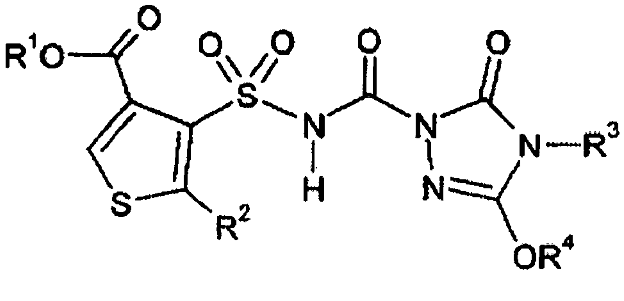

(I),

dans laquelle les radicaux $R^1$, $R^2$, $R^3$ et $R^4$ sont tels que définis ci-après :

| | $R^1$ | $R^2$ | $R^3$ | $R^4$ |
|---|---|---|---|---|
| A1 | Éthyle | Éthyle | Éthyle | Éthyle |
| A2 | Éthyle | Éthyle | Éthyle | Méthyle |
| A3 | Éthyle | Éthyle | Méthyle | Éthyle |
| A4 | Éthyle | Méthyle | Éthyle | Éthyle |
| A5 | Méthyle | Éthyle | Éthyle | Éthyle |
| A6 | Éthyle | Éthyle | Méthyle | Méthyle |
| A7 | Méthyle | Éthyle | Éthyle | Méthyle |
| A8 | Méthyle | Méthyle | Éthyle | Éthyle |
| A9 | Éthyle | Méthyle | Éthyle | Méthyle |
| A10 | Méthyle | Éthyle | Méthyle | Éthyle |
| A11 | Éthyle | Méthyle | Méthyle | Éthyle |
| A12 | Méthyle | Méthyle | Méthyle | Méthyle |
| A13 | Méthyle | Méthyle | Méthyle | Éthyle |
| A14 | Méthyle | Méthyle | Éthyle | Méthyle |
| A15 | Méthyle | Éthyle | Méthyle | Méthyle |
| A16 | Éthyle | Méthyle | Méthyle | Méthyle |

B) 4 à 30 % d'un agent protecteur B1 à B4 de formule (II)

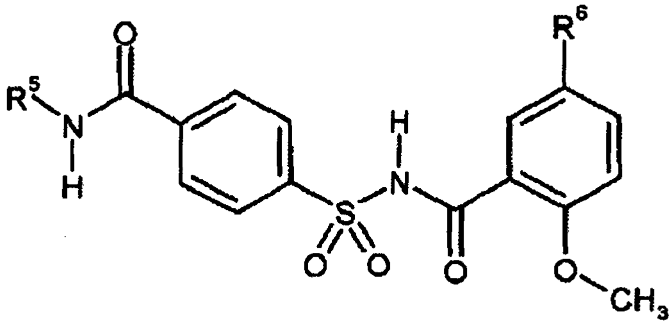

(II),

dans laquelle les radicaux $R^5$ et $R^6$ sont tels que définis ci-après :

| | $R^5$ | $R^6$ |
|---|---|---|
| B1 | Isopropyle | Hydrogène |
| B2 | Isopropyle | Chlore |
| B3 | Cyclopropyle | Hydrogène |
| B4 | Cyclopropyle | Chlore |

C) 0 à 35 % d'un agent actif herbicide C1 à C3 de formule (III)

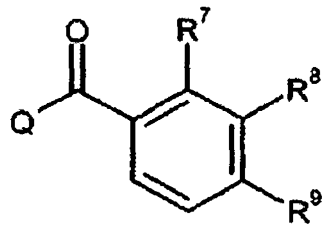

(III),

dans laquelle les radicaux Q, $R^7$, $R^8$ et $R^9$ sont tels que définis ci-après :

| | Q | $R^7$ | $R^8$ | $R^9$ |
|---|---|---|---|---|
| C1 | 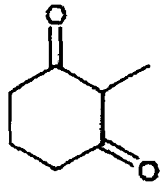 | Cl | $CH_2OCH_2CF_3$ | $SO_2CH_3$ |
| C2 | 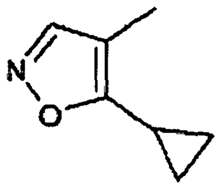 | $SO_2CH_3$ | H | $CF_3$ |
| C3 | 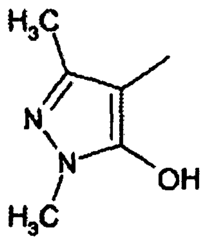 | $SO_2CH_3$ | H | $CF_3$ |

D) 0,5 à 30 % d'un ou de plusieurs dispersants,
E) 30 à 70 % d'eau,
F) 1 à 15 % d'un ou de plusieurs agents antigel,
G) 0,05 à 1 % d'un ou de plusieurs conservateurs,
H) 0,05 à 1 % d'un ou de plusieurs antimousses,
I) 0,1 à 5 % d'un ou de plusieurs agents épaississants ou thixotropiques.

**5.** Concentrés de suspension selon l'une quelconque des revendications 1 à 4, contenant :

A) 5 à 25 % d'un agent herbicide A1 à A16 de formule (I),
B) 5 à 25 % d'un agent protecteur B1 à B4 de formule (II),
C) 0 à 30 % d'un agent actif herbicide C1 à C3 de formule (III),
D) 1 à 20 % d'un ou de plusieurs dispersants,
E) 35 à 65 % d'eau,
F) 2 à 10 % d'un ou de plusieurs agents antigel,
G) 0,05 à 0,5 % d'un ou de plusieurs conservateurs,
H) 0,1 à 1 % d'un ou de plusieurs antimousses,
I) 0,2 à 3 % d'un ou de plusieurs agents épaississants ou thixotropiques.

**6.** Concentrés de suspension selon l'une quelconque des revendications 1 à 5, contenant :

A) 5 à 20 % d'un agent herbicide A1 à A16 de formule (I),

B) 8 à 20 % d'un agent protecteur B1 à B4 de formule (II),
C) 0 à 25 % d'un agent actif herbicide C1 à C3 de formule (III),
D) 2,5 à 15 % d'un ou de plusieurs dispersants,
E) 40 à 60 % d'eau,
F) 2 à 10 % d'un ou de plusieurs agents antigel,
G) 0,05 à 0,25 % d'un ou de plusieurs conservateurs,
H) 0,1 à 0,5 % d'un ou de plusieurs antimousses,
I) 0,25 à 2,5 % d'un ou de plusieurs agents épaississants ou thixotropiques.

**7.** Agent herbicide aqueux, pouvant être obtenu par dilution d'un concentré de suspension selon l'une quelconque des revendications 1 à 6 avec de l'eau.

**8.** Agent herbicide aqueux, pouvant être obtenu par dilution d'un concentré de suspension selon l'une quelconque des revendications 1 à 6 avec une solution aqueuse d'engrais.

**9.** Agent herbicide aqueux selon la revendication 8, dans lequel l'engrais est le sulfate d'ammonium ou le nitrate d'ammonium.

**10.** Procédé de lutte contre une végétation indésirable, dans lequel une quantité efficace d'un concentré de suspension aqueux selon l'une quelconque des revendications 1 à 6 est appliquée sur les plantes, des parties des plantes, les graines ou la surface sur laquelle les plantes poussent.

**11.** Utilisation d'un concentré de suspension selon l'une quelconque des revendications 1 à 6 pour lutter contre une végétation indésirable.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 03026427 A
- WO 03026426 A
- WO 2005087006 A
- WO 2005087004 A
- EP 1449434 A
- WO 03022049 A
- WO 0105788 A
- US 6251827 B
- US 6376429 B
- EP 0527036 A
- US 6420317 B


### In der Beschreibung aufgeführte Nicht-Patentliteratur


- The Pesticide Manual. The British Crop Protection Council and the Royal Soc. of Chemistry, 2003
- **WATKINS.** Handbook of Insecticide Dust Diluents and Carriers. Darland Books
- **CALDWELL N.J. ; H.V. OLPHEN.** Introduction to Clay Colloid Chemistry. J. Wiley & Sons
- **C. MARSDEN.** Solvents Guide. Interscience, 1963
- **MCCUTCHEON'S.** Detergents and Emulsifiers Annual. MC Publ. Corp,
- **SISLEY ; WOOD.** Encyclopedia of Surface Active Agents. Chem. Publ. Co. Inc, 1964
- **SCHÖNFELDT.** Grenzflächenaktive Äthylenoxidaddukte. Wiss. Verlagsgesell, 1976
- **WINNACKER-KÜCHLER.** Chemische Technologie. C. Hauser Verlag München, 1986, vol. 7
- **WADE VAN VALKENBURG.** Pesticide Formulations. Marcel Dekker, 1973
- Spray Drying. **K. MARTENS.** Handbook. G. Goodwin Ltd, 1979
- **S. R. COLBY.** *Weeds,* 1967, vol. 15, 20-22